# EUROPEAN PATENT SPECIFICATION

(11) **EP 4 571 174 B1**
(45) Date of publication and mention of the grant of the patent: **04.02.2026**
(21) Application number: 23866655.6
(22) Date of filing: 30.10.2023
(51) Int. Cl.: F21S 6/00, H02J 50/10, F21V 29/83, H02J 7/00, F21V 23/06, H02J 50/00, F21V 21/06, F21L 4/04, F21W 131/40

(54) **ELECTRONIC DEVICE AND ELECTRONIC ASSEMBLY**
ELEKTRONISCHE VORRICHTUNG UND ELEKTRONISCHE ANORDNUNG
DISPOSITIF ÉLECTRONIQUE ET ENSEMBLE ÉLECTRONIQUE

(30) Priority: 13.10.2023 CN 202322778531 U
(43) Date of publication of application: 18.06.2025
(73) Proprietor: Gopod Group Holding Limited, Shenzhen, Guangdong 518109 (CN)
(72) Inventor: LIAO, Zhuowen, Shenzhen, Guangdong 518109 (CN); LIN, Shipei, Shenzhen, Guangdong 518109 (CN)
(74) Representative: Santarelli
(86) International application number: PCT/CN2023/127982
(87) International publication number: WO 2025/076873

(56) References cited:
- CN-U- 208 316 415
- CN-U- 214 790 625
- CN-U- 216 203 039
- CN-U- 216 976 738
- CN-U- 219 678 143
- KR-U- 20150 000 362

## Description

### Technical Field

This disclosure relates to the field of electronic components, and more particularly to an electronic device and electronic component.

### Background Art

With societal progress and the continuous improvement of people's living standards, driving out for camping has gradually become a popular tourism activity. Camping allows people to relieve life stress and get close to nature.

However, camping usually takes place in outdoor environments, and when night falls, due to the poor visibility at night, a light source is needed. To solve this problem, a lighting lamp is usually set up on an outdoor mobile power supply to provide illumination for the entire camping team.

CN216203039U discloses a multifunctional outdoor emergency lamp, including a lamp body shell, a lamp cover forms a hollow structure with the lamp body shell, an LED lamp panel and a storage battery are sequentially mounted inside the lamp body shell, a PCB is arranged below the storage battery, a left side face and a right side face of the storage battery are each provided with a power output port. The power output port in one side of the storage battery is connected with a high-speed multifunctional I/O interface charging wire, the power output port in the other side of the storage battery is connected with a Type-C interface charging wire. A left side face and a right side face of the lamp body shell are each provided with a wire outlet, and the high-speed multifunctional I/O interface charging wire and the Type-C interface charging wire extend out from the wire outlets respectively. A wire receiving groove is formed on the upper side of the lamp body shell.

CN219678143U discloses a mobile power supply, which includes a shell, a battery module, a wireless charging assembly and a lighting assembly, an opening is formed in the bottom of the shell; the battery module is arranged inside the shell; the wireless charging assembly is arranged on the upper side of the shell; and the lighting assembly is arranged in the bottom of the shell and seals the opening.

However, the lighting lamps in existing technologies have a single function, providing only illumination. When users forget to carry or lose their data cables, they cannot charge their smartphones, which affects the battery life of the smartphones.

### Summary of the Invention

In view of the foregoing, the purpose of this disclosure is to overcome the deficiencies in existing technology by providing an electronic device that solves the technical problem of existing lighting lamps having a single function and only providing illumination, which leads to the inability to charge smartphones when users forget to carry or lose their data cables, affecting the battery life of the smartphones.

To solve the above technical problem, this disclosure provides:
An electronic device, comprising:
A housing, said housing having an accommodation cavity with open ends and provided with a partition, said partition dividing said accommodation cavity into a first accommodation slot and a second accommodation slot;
A wireless charging module, said wireless charging module being arranged within said first accommodation slot;
A lighting module, said lighting module being arranged within said second accommodation slot;
Wherein, heat dissipation holes are provided along the outer periphery of said housing, said heat dissipation holes communicating with said first accommodation slot and/or said second accommodation slot.

Furthermore, according to the electronic device of this disclosure, additional technical features may include:
In some embodiments of this disclosure, said electronic device further includes a mask assembly, said mask assembly comprising a first mask and a second mask, said first mask being mounted at the opening of said first accommodation slot, and said second mask being mounted at the opening of said second accommodation slot.

In some embodiments of this disclosure, said second mask is made of a transparent material in one piece.

In some embodiments of this disclosure, there are multiple heat dissipation holes, which are spaced apart along the outer periphery of said housing.

In some embodiments of this disclosure, said electronic device further includes a base, with said housing movably arranged on said base.

In some embodiments of this disclosure, said electronic device further includes a connector, said connector being hingedly connected to both said base and said housing.

In some embodiments of this disclosure, said base is provided with a first connecting part at an end away from said housing.

In some embodiments of this disclosure, said first connecting part is provided with a first conductive component, which is electrically connected to both said wireless charging module and said lighting module.

Additionally, this disclosure also provides an electronic component, including an outdoor mobile power supply and the electronic device described in any of the above embodiments.

In some embodiments of this disclosure, said electronic device is arranged on said outdoor mobile power supply, said outdoor mobile power supply having a second connecting part near the end close to said electronic device, said second connecting part being provided with a second conductive component, which is electrically connected to said electronic device.

Compared to existing technology, the beneficial effects of this disclosure are:
This disclosure proposes an electronic device, which includes a housing, a wireless charging module, and a lighting module. The housing has an accommodation cavity with open ends and is provided with a partition, which divides the accommodation cavity into a first accommodation slot and a second accommodation slot. By arranging a lighting module within the second accommodation slot, the lighting function of the electronic device is realized, and by arranging a wireless charging module within the first accommodation slot, the wireless charging function of the electronic device is realized. Thus, when users forget to carry or lose their data cables, they can charge their smartphones through the wireless charging module of the electronic device, enhancing the battery life of the smartphones.

At the same time, the partition can also serve as a heat insulator, effectively reducing the mutual influence of heat generated by the lighting module and the wireless charging module. By providing heat dissipation holes along the outer periphery of the housing that communicate with the first accommodation slot and/or the second accommodation slot, a heat dissipation function is achieved, which is conducive to discharging the heat generated by the lighting module and the wireless charging module during operation, preventing damage due to excessive temperature, and effectively extending the service life of the electronic device.

### Brief Description of the Drawings

To more clearly illustrate the technical solutions in the embodiments of this disclosure, the drawings needed for the embodiments will be briefly introduced below. It should be understood that the following drawings only show some embodiments of this disclosure and therefore should not be considered as limiting the scope. For those of ordinary skill in the art, other related drawings can be obtained based on these drawings without creative efforts.
FIG. 1 shows a perspective view of an electronic device in some embodiments of this disclosure;
FIG. 2 shows another perspective view of an electronic device in some embodiments of this disclosure;
FIG. 3 shows a perspective view of the electronic device in FIG. 1 with the mask assembly removed;
FIG. 4 shows a perspective view of the electronic device in FIG. 2 with the mask assembly removed;
FIG. 5 shows a third perspective view of an electronic device in some embodiments of this disclosure;
FIG. 6 shows a fourth perspective view of an electronic device in some embodiments of this disclosure;
FIG. 7 shows a perspective view of an electronic component in some embodiments of this disclosure;
FIG. 8 shows a perspective view of an outdoor mobile power supply in some embodiments of this disclosure.

### Reference numerals:

100-Electronic device; 110-Housing; 111-Accommodation cavity; 1111-First accommodation slot; 1112-Second accommodation slot; 112-Partition; 113-Heat dissipation hole; 120-Wireless charging module; 130-Lighting module; 140-Mask assembly; 141-First mask; 142-Second mask; 150-Base; 151-First connecting part; 1511-First conductive component; 160-Connector; 1000-Electronic component; 200-Outdoor mobile power supply; 210-Second connecting part; 211-Second conductive component.

### Detailed Description of Embodiments

The embodiments of this disclosure are described in detail below, with examples shown in the accompanying drawings, where the same or similar reference numbers denote the same or similar elements or elements with the same or similar functions throughout. The embodiments described by reference to the drawings are exemplary and are only used to explain this disclosure and should not be construed as limiting this disclosure.

In the description of this disclosure, it should be understood that terms such as "center," "longitudinal," "transverse," "length," "width," "thickness," "top," "bottom," "front," "back," "left," "right," "vertical," "horizontal," "top," "bottom," "inside," "outside," "clockwise," "counterclockwise," "axial," "radial," "circumferential," and other orientation or positional relationships are based on the orientations or positional relationships shown in the drawings, which are only for convenience in describing this disclosure and simplifying the description, and do not indicate or imply that the devices or elements referred to must have a particular orientation, be constructed and operated in a particular orientation, and therefore should not be construed as limiting this disclosure.

Furthermore, terms such as "first," "second," and the like are used for descriptive purposes only and should not be construed as indicating or implying relative importance or implicitly indicating the number of technical features indicated. Thus, features defined as "first," "second," and the like can explicitly or implicitly include one or more of such features. In the description of this disclosure, the meaning of "a plurality" is two or more unless otherwise specifically defined.

In this disclosure, unless otherwise clearly defined and limited, terms such as "mounted," "connected," "connected," "fixed," and the like should be understood broadly, for example, they can be fixedly connected, detachably connected, or integrally formed; they can be mechanically connected or electrically connected; they can be directly connected or indirectly connected through an intermediary, or they can be the internal communication of two elements or the interaction between two elements. For those of ordinary skill in the art, the specific meanings of the above terms in this disclosure can be understood according to specific circumstances.

In this disclosure, unless otherwise clearly defined and limited, the first feature "on" or "under" the second feature can mean that the first and second features are in direct contact, or the first and second features are not in direct contact but instead are indirectly connected through an intermediary. Moreover, the first feature "above," "above," and "on top of" the second feature can mean that the first feature is directly above or obliquely above the second feature, or simply that the first feature is higher than the second feature in terms of horizontal height. The first feature "below," "below," and "underneath" the second feature can mean that the first feature is directly below or obliquely below the second feature, or simply that the first feature is lower than the second feature in terms of horizontal height.

### Embodiment One

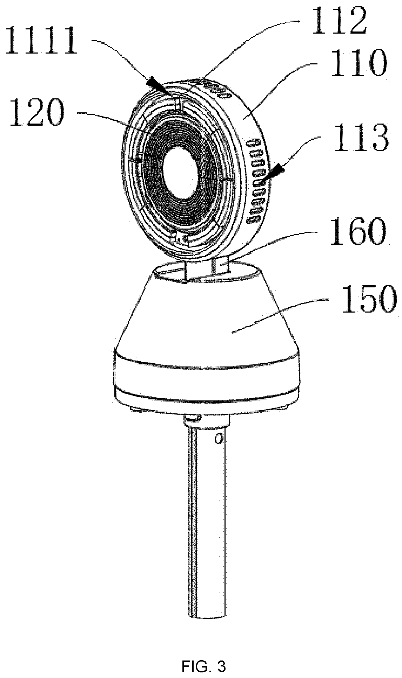

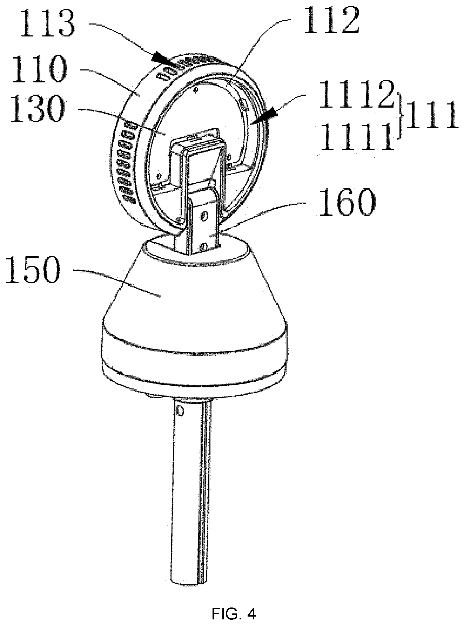

As shown in FIGS. 3 and 4, an embodiment of this disclosure provides an electronic device 100, mainly used in electronic components 1000. The electronic device 100 includes a housing 110, a wireless charging module 120, and a lighting module 130.

Wherein, the housing 110 has an accommodation cavity 111 with open ends and is provided with a partition 112, which divides the accommodation cavity 111 into a first accommodation slot 1111 and a second accommodation slot 1112. The wireless charging module 120 is arranged within the first accommodation slot 1111, and the lighting module 130 is arranged within the second accommodation slot 1112. Heat dissipation holes 113 are provided along the outer periphery of the housing 110, which communicate with the first accommodation slot 1111 and/or the second accommodation slot 1112.

The electronic device 100 provided in the embodiment of this disclosure has a housing 110 with an accommodation cavity 111 with open ends and provided with a partition 112, which divides the accommodation cavity 111 into a first accommodation slot 1111 and a second accommodation slot 1112. By arranging a lighting module 130 within the second accommodation slot 1112, the lighting function of the electronic device 100 is realized, and by arranging a wireless charging module 120 within the first accommodation slot 1111, the wireless charging function of the electronic device 100 is realized. Thus, when users forget to carry or lose their data cables, they can charge their smartphones through the wireless charging module 120 of the electronic device 100, enhancing the battery life of the smartphones. This avoids the technical problem in existing technology where the lighting lamp has a single function, only providing illumination, and when users forget to carry or lose their data cables, they cannot charge their smartphones, affecting the battery life of the smartphones.

At the same time, the partition 112 can also serve as a heat insulator, effectively reducing the mutual influence of heat generated by the lighting module 130 and the wireless charging module 120. By providing heat dissipation holes 113 along the outer periphery of the housing 110 that communicate with the first accommodation slot 1111 and/or the second accommodation slot 1112, a heat dissipation function is achieved, which is conducive to discharging the heat generated by the lighting module 130 and the wireless charging module 120 during operation, preventing damage due to excessive temperature, and effectively extending the service life of the electronic device 100.

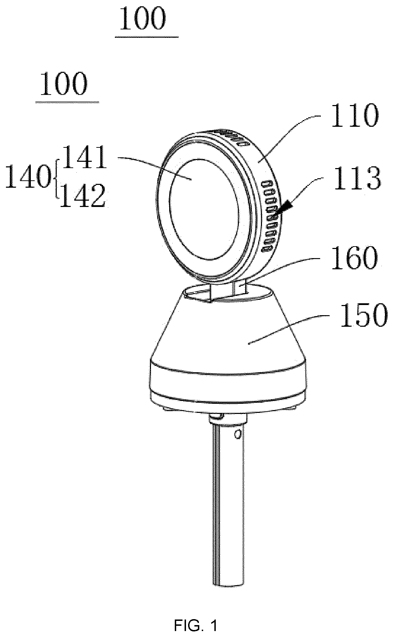

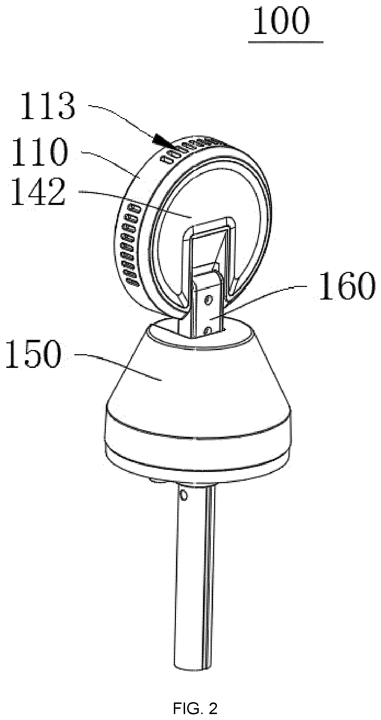

As shown in FIGS. 1 and 2, in one embodiment of this disclosure, optionally, the electronic device 100 further includes a mask assembly 140, which comprises a first mask 141 and a second mask 142, with the first mask 141 mounted at the opening of the first accommodation slot 1111, and the second mask 142 mounted at the opening of the second accommodation slot 1112.

In this embodiment, by setting the first mask 141 at the opening of the first accommodation slot 1111, on one hand, it can protect the wireless charging module 120 inside the first accommodation slot 1111 and enhance the aesthetics of the electronic device 100, and on the other hand, it can also serve as a placement area, facilitating the placement of smartphones on the first mask 141 for wireless charging.

By setting the second mask 142 at the opening of the second accommodation slot 1112, it can protect the lighting module 130 inside the second accommodation slot 1112 and enhance the aesthetics of the electronic device 100.

Wherein, the first mask 141 and the second mask 142 are both detachably connected to the housing 110 to facilitate the installation, removal, and maintenance or replacement of the wireless charging module 120 and the lighting module 130.

In the above embodiments of this disclosure, optionally, the second mask 142 is made of a transparent material in one piece.

In this embodiment, the second mask 142 is made of a transparent material in one piece, allowing the light emitted by the lighting module 130 to pass through the second mask 142 and illuminate the external environment, thereby realizing its lighting function.

Exemplarily, the material used for the second mask 142 can be transparent PC (Polycarbonate), PS (Polystyrene), PMMA (polymethyl methacrylate), or other materials.

In the above embodiments of this disclosure, optionally, the second mask 142 is provided with a frosted layer or a light-transmitting paint on the side away from the second accommodation slot 1112.

In this embodiment, by setting a frosted layer or applying light-transmitting paint on the surface of the second mask 142 away from the second accommodation slot 1112, the frosted layer or light-transmitting paint can homogenize the light emitted by the lighting module 130 to achieve a fogging effect of the light. At the same time, it can also prevent users from directly observing the internal structure of the second accommodation slot 1112 from the outside, enhancing the aesthetics.

Optionally, the frosted layer can be a matte layer or a leather grain layer, that is, the surface of the second mask 142 can be treated with a matte or leather grain process to give the light emitted by the lighting module 130 a fogging effect.

As shown in FIGS. 1 and 2, in one embodiment of this disclosure, optionally, there are multiple heat dissipation holes 113, which are spaced apart along the outer periphery of the housing 110.

In this embodiment, by setting multiple heat dissipation holes 113 and spacing them apart along the outer periphery of the housing 110, the heat dissipation effect can be further enhanced, further facilitating the discharge of heat generated by the lighting module 130 and the wireless charging module 120 during operation, preventing damage due to excessive temperature, and effectively extending the service life of the electronic device 100.

As shown in FIGS. 1 and 2, in any of the above embodiments of this disclosure, optionally, the electronic device 100 further includes a base 150, with the housing 110 movably arranged on the base 150.

In this embodiment, by movably arranging the housing 110 on the base 150, the angle between the housing 110 and the base 150 can be adjusted, thereby facilitating outdoor lighting or wireless charging of smartphones.

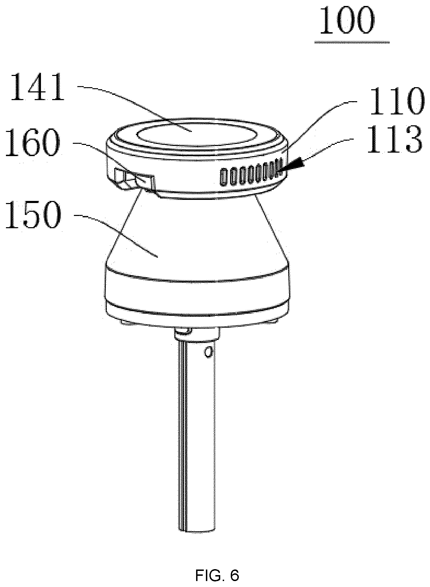

As shown in FIGS. 1, 2, and 6, in the above embodiments of this disclosure, optionally, the electronic device 100 further includes a connector 160, which is hingedly connected to both the base 150 and the housing 110.

In this embodiment, by hingedly connecting the connector 160 to both the base 150 and the housing 110, the housing 110 can rotate relative to the base 150 to adjust the angle between the housing 110 and the base 150, thereby adjusting the lighting direction of the lighting module 130. At the same time, by adjusting the housing 110 to any angle with the base 150, a smartphone can be placed on the electronic device 100 to achieve magnetic suction wireless charging.

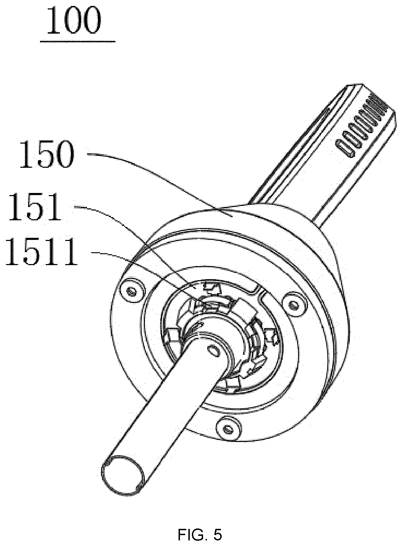

As shown in FIG. 5, in the above embodiments of this disclosure, optionally, the base 150 is provided with a first connecting part 151 at an end away from the housing 110.

In this embodiment, by providing a first connecting part 151 at the end of the base 150 away from the housing 110, it can be connected to an outdoor mobile power supply 200 through the first connecting part 151.

As shown in FIG. 5, in any of the above embodiments of this disclosure, optionally, the first connecting part 151 is provided with a first conductive component 1511, which is electrically connected to both the wireless charging module 120 and the lighting module 130.

In this embodiment, by providing a first conductive component 1511 on the first connecting part 151, it can be electrically connected to the outdoor mobile power supply 200 through the first conductive component 1511, and by electrically connecting the first conductive component 1511 to both the wireless charging module 120 and the lighting module 130, the power supply function for the wireless charging module 120 and the lighting module 130 is realized.

Exemplarily, the first conductive component 1511 can be a metal conductive strip.

### Embodiment Two

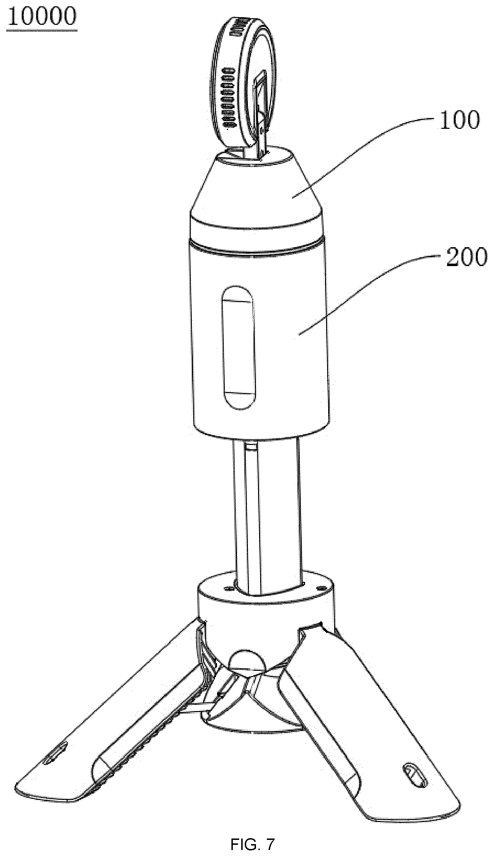

As shown in FIG. 7, a second embodiment of this disclosure also provides an electronic component 1000, including an outdoor mobile power supply 200 and the electronic device 100 described in any of the embodiments of Embodiment One.

This electronic component 1000 has the electronic device 100 described in Embodiment One, and therefore has all the beneficial effects described in Embodiment One, which are not reiterated here.

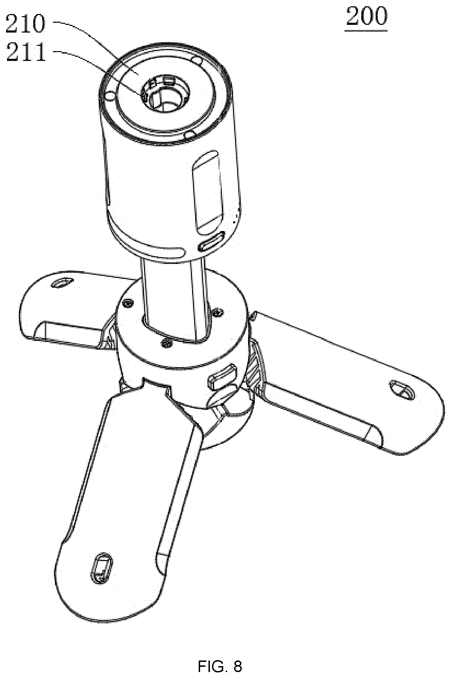

As shown in FIG. 8, in the above embodiments of this disclosure, optionally, the electronic device 100 is arranged on the outdoor mobile power supply 200, with the outdoor mobile power supply 200 having a second connecting part 210 near the end close to the electronic device 100, said second connecting part being provided with a second conductive component 211, which is electrically connected to the electronic device 100.

In this embodiment, by providing a second connecting part 210 on the outdoor mobile power supply 200 near the electronic device 100, the electronic device 100 can be connected to the outdoor mobile power supply 200 through the joining of the first connecting part 151 and the second connecting part 210.

By providing a second conductive component 211 on the second connecting part 210, the electronic device 100 can be electrically connected to the outdoor mobile power supply 200 through the contact between the first conductive component 1511 and the second conductive component 211, thereby realizing the power supply function for the wireless charging module 120 and the lighting module 130.

Exemplarily, the second conductive component 211 can be a metal conductive strip.

In summary, this disclosure proposes an electronic device 100, which includes a housing 110, a wireless charging module 120, and a lighting module 130. The housing has an accommodation cavity 111 with open ends and is provided with a partition 112, which divides the accommodation cavity into a first accommodation slot 1111 and a second accommodation slot 1112. By arranging a lighting module 130 within the second accommodation slot 1112, the lighting function of the electronic device 100 is realized, and by arranging a wireless charging module 120 within the first accommodation slot 1111, the wireless charging function of the electronic device 100 is realized. Thus, when users forget to carry or lose their data cables, they can charge their smartphones through the wireless charging module 120 of the electronic device 100, enhancing the battery life of the smartphones.

At the same time, the partition 112 can also serve as a heat insulator, effectively reducing the mutual influence of heat generated by the lighting module 130 and the wireless charging module 120. By providing heat dissipation holes 113 along the outer periphery of the housing 110 that communicate with the first accommodation slot 1111 and/or the second accommodation slot 1112, a heat dissipation function is achieved, which is conducive to discharging the heat generated by the lighting module 130 and the wireless charging module 120 during operation, preventing damage due to excessive temperature, and effectively extending the service life of the electronic device 100.

In the description of this specification, the terms "an embodiment," "some embodiments," "example," "specific examples," or "some examples" etc., refer to specific features, structures, materials, or characteristics included in at least one embodiment or example of this disclosure. In this specification, the schematic representation of such terms does not necessarily refer to the same embodiment or example. Moreover, the described specific features, structures, materials, or characteristics may be combined in any suitable manner in one or more embodiments or examples. Furthermore, without conflicting, those skilled in the art can combine and combine the different embodiments or examples and the features of different embodiments or examples described in this specification.

Although the embodiments of this disclosure have been shown and described, it can be understood that the above embodiments are exemplary and should not be construed as limiting this disclosure. Those of ordinary skill in the art can make changes, modifications, substitutions, and variations to the above-described embodiments within the scope of this disclosure.

### Industrial Applicability

This disclosure proposes an electronic device and electronic component. The electronic device includes a housing, a wireless charging module, and a lighting module. The housing has an accommodation cavity with open ends and is provided with a partition, which divides the accommodation cavity into a first accommodation slot and a second accommodation slot. By arranging a lighting module within the second accommodation slot, the lighting function of the electronic device is realized, and by arranging a wireless charging module within the first accommodation slot, the wireless charging function of the electronic device is realized. Thus, when users forget to carry or lose their data cables, they can charge their smartphones through the wireless charging module of the electronic device, enhancing the battery life of the smartphones. Additionally, the partition can also serve as a heat insulator, effectively reducing the mutual influence of heat generated by the lighting module and the wireless charging module. By providing heat dissipation holes along the outer periphery of the housing that communicate with the first accommodation slot and/or the second accommodation slot, a heat dissipation function is achieved, which is conducive to discharging the heat generated by the lighting module and the wireless charging module during operation, preventing damage due to excessive temperature, and effectively extending the service life of the electronic device.

Furthermore, it can be understood that the electronic device and electronic component provided by this disclosure are reproducible and can be used in various industrial applications.

## Claims

1. An electronic device (100), comprising
a housing (110), said housing having an outer circumference and an accommodation cavity (111) with openings at both ends and provided with a partition (112), said partition dividing said accommodation cavity (111) into a first accommodation slot (1111) and a second accommodation slot (1112);
a wireless charging module (120), said wireless charging module (120) being located within said first accommodation slot (1111);
a lighting module (130), said lighting module (130) being located within said second accommodation slot (1112);
wherein heat dissipation holes (113) are provided along the outer circumference of said housing (110), said heat dissipation holes (113) being in communication with said first accommodation slot (1111) and/or said second accommodation slot (1112).

2. The electronic device according to claim 1, **characterized in that** said electronic device (100) further comprises a mask assembly (140), said mask assembly including a first mask (141) and a second mask (142), said first mask (141) being installed at the opening of said first accommodation slot (1111), said second mask (142) being installed at the opening of said second accommodation slot (1112).

3. The electronic device (100) according to claim 2, **characterized in that** said second mask (142) is made of a transparent material integrally formed.

4. The electronic device (100) according to claim 1, **characterized in that** there are multiple heat dissipation holes (113), said multiple heat dissipation holes (113) being spaced apart along the outer circumference of said housing (110).

5. The electronic device (100) according to any one of claims 1 to 4, **characterized in that** said electronic device further comprises a base (150), said housing (110) being movably set on said base (150).

6. The electronic device (100) according to claim 5, **characterized in that** said electronic device further comprises a connector (160), said connector being hinged respectively to said base (150) and said housing (110).

7. The electronic device (100) according to claim 5, **characterized in that** said base (150) is provided with a first connecting part (151) at an end away from said housing (110).

8. The electronic device (100) according to claim 7, **characterized in that** said first connecting part (151) is provided with a first conductive component (1511), said first conductive component (1511) being electrically connected respectively to said wireless charging module (120) and said lighting module (130).

9. An electronic component (1000), comprising an outdoor mobile power supply (200) and the electronic device (100) according to any one of claims 1 to 8.

10. The electronic component (1000) according to claim 9, **characterized in that** said electronic device (100) is set on said outdoor mobile power supply (200), said outdoor mobile power supply (200) is provided with a second connecting part (210) at an end near said electronic device (100), said second connecting part (210) is provided with a second conductive component (211), said second conductive component (211) being electrically connected to said electronic device (100).

## Patentansprüche

1. Elektronische Vorrichtung (100), die ein Gehäuse (110) umfasst, wobei das Gehäuse einen Außenumfang und einen Unterbringungshohlraum (111) mit Öffnungen an beiden Enden aufweist
und mit einer Trennwand (112) bereitgestellt ist, wobei die Trennwand den Unterbringungshohlraum (111) in einen ersten Unterbringungsschlitz (1111) und einen zweiten Unterbringungsschlitz (1112) unterteilt;
ein drahtloses Lademodul (120), wobei sich das drahtlose Lademodul (120) innerhalb des ersten Unterbringungsschlitzes (1111) befindet;
ein Beleuchtungsmodul (130), wobei sich das Beleuchtungsmodul (130) innerhalb des zweiten Unterbringungsschlitzes (1112) befindet;
wobei Wärmeableitungslöcher (113) entlang des Außenumfangs des Gehäuses (110) bereitgestellt sind, wobei die Wärmeableitungslöcher (113) in Verbindung mit dem ersten Unterbringungsschlitz (1111) und/oder dem zweiten Unterbringungsschlitz (1112) stehen.

2. Elektronische Vorrichtung nach Anspruch 1, **dadurch gekennzeichnet, dass** die elektronische Vorrichtung (100) weiter eine Maskenanordnung (140) umfasst, wobei die Maskenanordnung eine erste Maske (141) und eine zweite Maske (142) beinhaltet, wobei die erste Maske (141) an der Öffnung des ersten Unterbringungsschlitzes (1111) installiert ist, wobei die zweite Maske (142) an der Öffnung des zweiten Unterbringungsschlitzes (1112) installiert ist.

3. Elektronische Vorrichtung (100) nach Anspruch 2, **dadurch gekennzeichnet, dass** die zweite Maske (142) aus einem integral gebildeten transparenten Material gefertigt ist.

4. Elektronische Vorrichtung (100) nach Anspruch 1, **dadurch gekennzeichnet, dass** mehrere Wärmeableitungslöcher (113) vorhanden sind, wobei die mehreren Wärmeableitungslöcher (113) entlang des Außenumfangs des Gehäuses (110) voneinander beabstandet sind.

5. Elektronische Vorrichtung (100) nach einem der Ansprüche 1 bis 4, **dadurch gekennzeichnet, dass** die elektronische Vorrichtung weiter eine Basis (150) umfasst, wobei das Gehäuse (110) bewegbar auf der Basis (150) aufgesetzt ist.

6. Elektronische Vorrichtung (100) nach Anspruch 5, **dadurch gekennzeichnet, dass** die elektronische Vorrichtung weiter einen Verbinder (160) umfasst, wobei der Verbinder jeweils an der Basis (150) und dem Gehäuse (110) angelenkt ist.

7. Elektronische Vorrichtung (100) nach Anspruch 5, **dadurch gekennzeichnet, dass** die Basis (150) an einem von dem Gehäuse (110) entfernten Ende mit einem ersten Verbindungsteil (151) bereitgestellt ist.

8. Elektronische Vorrichtung (100) nach Anspruch 7, **dadurch gekennzeichnet, dass** das erste Verbindungsteil (151) mit einer ersten leitfähigen Komponente (1511) bereitgestellt ist, wobei die erste leitfähige Komponente (1511) elektrisch jeweils mit dem drahtlosen Lademodul (120) und dem Beleuchtungsmodul (130) verbunden ist.

9. Elektronische Komponente (1000), die eine bewegliche Außenstromversorgung (200) und die elektronische Vorrichtung (100) nach einem der Ansprüche 1 bis 8 umfasst.

10. Elektronische Komponente (1000) nach Anspruch 9, **dadurch gekennzeichnet, dass** die elektronische Vorrichtung (100) auf die bewegliche Außenstromversorgung (200) aufgesetzt ist, die bewegliche Außenstromversorgung (200) an einem Ende in der Nähe der elektronischen Vorrichtung (100) mit einem zweiten Verbindungsteil (210) bereitgestellt ist, der zweite Verbindungsteil (210) mit einer zweiten leitfähigen Komponente (211) bereitgestellt ist, wobei die zweite leitfähige Komponente (211) elektrisch mit der elektronischen Vorrichtung (100) verbunden ist.

## Revendications

1. Dispositif électronique (100), comportant un boîtier (110), ledit boîtier présentant une circonférence externe et une cavité de réception (111) avec des ouvertures au niveau des deux extrémités
et dotée d'une cloison (112), ladite cloison divisant ladite cavité de réception (111) en une première fente de réception (1111) et une seconde fente de réception (1112) ; un module de charge sans fil (120), ledit module de charge sans fil (120) étant situé au sein de ladite première fente de réception (1111) ;
un module d'éclairage (130), ledit module d'éclairage (130) étant situé à l'intérieur de ladite seconde fente de réception (1112) ;
dans lequel des trous de dissipation de chaleur (113) sont disposés le long de la circonférence externe dudit boîtier (110), lesdits trous de dissipation de chaleur (113) étant en communication avec ladite première fente de réception (1111) et/ou ladite seconde fente de réception (1112).

2. Dispositif électronique selon la revendication 1, **caractérisé en ce que** ledit dispositif électronique (100) comporte en outre un ensemble masque (140), ledit ensemble masque incluant un premier masque (141) et un second masque (142), ledit premier masque (141) étant installé au niveau de l'ouverture de ladite première fente de réception (1111), ledit second masque (142) étant installé au niveau de l'ouverture de ladite seconde fente de réception (1112).

3. Dispositif électronique (100) selon la revendication 2, **caractérisé en ce que** ledit second masque (142) est composé d'un matériau transparent formé d'un seul tenant.

4. Dispositif électronique (100) selon la revendication 1, **caractérisé en ce qu'**il existe de multiples trous de dissipation de chaleur (113), lesdits multiples trous de dissipation de chaleur (113) étant espacés le long de la circonférence externe dudit boîtier (110).

5. Dispositif électronique (100) selon l'une quelconque des revendications 1 à 4, **caractérisé en ce que** ledit dispositif électronique comporte en outre une base (150), ledit boîtier (110) étant fixé de façon mobile sur ladite base (150).

6. Dispositif électronique (100) selon la revendication 5, **caractérisé en ce que** ledit dispositif électronique comporte en outre un connecteur (160), ledit connecteur étant articulé respectivement sur ladite base (150) et ledit boîtier (110).

7. Dispositif électronique (100) selon la revendication 5, **caractérisé en ce que** ladite base (150) est dotée d'une première partie de connexion (151) au niveau d'une extrémité éloignée dudit boîtier (110).

8. Dispositif électronique (100) selon la revendication 7, **caractérisé en ce que** ladite première partie de connexion (151) est dotée d'un premier composant conducteur (1511), ledit premier composant conducteur (1511) étant électriquement connecté respectivement audit module de charge sans fil (120) et audit module d'éclairage (130).

9. Composant électronique (1000), comportant une alimentation électrique mobile extérieure (200) et le dispositif électronique (100) selon l'une quelconque des revendications 1 à 8.

10. Composant électronique (1000) selon la revendication 9, **caractérisé en ce que** ledit dispositif électronique (100) est placé sur ladite alimentation électrique mobile extérieure (200), ladite alimentation électrique mobile extérieure (200) étant dotée d'une seconde partie de connexion (210) au niveau d'une extrémité proche dudit dispositif électronique (100), ladite seconde partie de connexion (210) étant dotée d'un second composant conducteur (211), ledit second composant conducteur (211) étant électriquement connecté audit dispositif électronique (100).
